**Europäisches Patentamt**

(19) **European Patent Office**

**Office européen des brevets**

(11) Veröffentlichungsnummer: **0 158 184**
**B1**

(12) **EUROPÄISCHE PATENTSCHRIFT**

(45) Veröffentlichungstag der Patentschrift:
20.07.88

(51) Int. Cl.⁴: **G 01 M 13/02**

(21) Anmeldenummer: **85103274.8**

(22) Anmeldetag: **21.03.85**

(54) Verspannprüfstand für Wellen.

(30) Priorität: **23.03.84 DE 3410702**

(43) Veröffentlichungstag der Anmeldung:
**16.10.85 Patentblatt 85/42**

(45) Bekanntmachung des Hinweises auf die Patenterteilung:
**20.07.88 Patentblatt 88/29**

(84) Benannte Vertragsstaaten:
**DE FR GB IT SE**

(56) Entgegenhaltungen:
**US-A-3 796 092**

**A.T.Z., Band 75, Nr. 9, 1973, Seiten 335-338,
Stuttgart, DE; J. TELSCHOW: "Ein neuer Gelenk-
und Kardanwellenprüfstand"
AUTOMOTIVE INDUSTRIES, Januar 1981, Seite 47,
Philadelphia, US; P.J. MULLINS: "Computer test
rig cuts design lead time"**

(73) Patentinhaber: **BAYERISCHE MOTOREN WERKE
Aktiengesellschaft, Postfach 40 02 40 Petuelring
130 - AJ- 36, D-8000 München 40 (DE)**

(72) Erfinder: **Kolitsch, Jörg, Schleissheimer Strasse
274/9, D-8000 München 40 (DE)**

(74) Vertreter: **Bullwein, Fritz, Bayerische Motoren
Werke Aktiengesellschaft Postfach 40 02 40
Petuelring 130 AJ- 33, D-8000 München 40 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf einen Verspannprüfstand für Wellen, mit einem durch Umlenkgetriebe geschlossenen und zwei parallele Prüfstrecken enthaltenden Prüfkreis, in denen jeweils eine Welle durch eine Verspannkupplung mit einem einer Drehbewegung überlagerten Drehmoment verspannt ist, und mit einer Vorrichtung für eine zusätzliche Prüfbelastung des Wellenendes.

Ein derartiger Prüfstand ist aus der DE-PS-2 057 872 bekannt. Dabei sollen der, Prüfling bzw. die Prüflinge innerhalb einer Prüfstrecke mit dem Gesamtdrehmoment um eine in Abhängigkeit von der Elastizität des Prüflings einer Prüfstrecke zur Elastizität aller eingebauten Prüflinge entsprechenden Winkel verspannt sein. Es besteht demnach ein Zusammenhang zwischen den Elastizitäten sämtlicher Prüflinge. Dies setzt voraus, daß diese mechanisch miteinander gekoppelt sind, sodaß die für die Bestimmung der Eigenfrequenz des Prüfstands maßgebliche Masse relativ hoch und damit diese Frequenz relativ niedrig ist. Darüber hinaus ergeben sich erhebliche Schwierigkeiten bei der Auswertung der mit dem Prüfstand erzielten Ergebnisse. Ist das auf jeden Prüfling wirkende Drehmoment gleich dem Gesamtdrehmoment so ist neben dem Drehmoment in der Prüfstrecke des Prüflings auch das Drehmoment der anderen Prüfstrecke zu berücksichtigen. Ist hingegen der Verspannwinkel unabhänig vom Gesamtdrehmoment, so ist neben der Elastizität des Prüflings auch die Elastizität sämtlichen anderer Prüflinge zu berücksichtigen.

Beim bekannten Verspannprüfstand werden die zusätzlichen Prüfbelastungen mit Hilfe einer Führungsstrecke aufgebracht, die zwischen zwei Prüflingen in einer Prüfstrecke angeordnet und durch zusätzliche Antriebe bewegt sind. Dies führt zu einer erheblichen Länge der Prüfstrecken und aufgrund der in dieser Prüfstrecke angeordneten mehreren Prüflingen zu einer weiteren Erniedrigung der Eigenfrequenz des Prüfstands.

Der Erfindung liegt die Aufgabe zugrunde, einen Prüfstand der eingangs genannten Art zu schaffen, der sich durch einen konstruktiv einfachen Aufbau auszeichnet und der darüber hinaus eine hohe Eigenfrequenz besitzt.

Die Erfindung löste diese Aufgabe dadurch, daß die in den Prüfstrecken aufgebrachten Drehmomente entgegengesetzt gleich sind und daß die Prüfbelastungen mittels des einen Umlenkgetriebes erzeugt sind, das in einem vorgegebenen Abstand vom anderen Umlenkgetriebe beweglich gelagert ist.

Durch die Gleicheit der Drehmomente in beiden Prüfstrecken werden Wechselwirkungen zwischen den beiden Prüfstrecken bzw. der darin angeordneten Prüflinge völlig vermieden. Dadurch wird die für die Eigenfrequenz maßgebliche Masse verringert. Ist darüber hinaus in jeder Prüfstrecke nur ein Prüfling angeordnet, so ist die Eigenfrequenz des Prüfstands im wesentlichen gleich der der Wellen. Damit ergeben sich Prüfverhältnisse, die nahezu exakt dem Praxisbetrieb entsprechen. Das Aufbringen der zusätzlichen Prüfbelastungen mit Hilfe eines der beiden Umlenkgetriebe selbst läßt Führungsstrecken oder dergleichen entfallen und führt damit unmittelbar zu einem konstruktiv besonders einfachen Aufbau und einer kurzen Baulänge des gesamtem Prüfstands.

Die zusätzlichen Prüfbelastungen können auf unterschiedliche Weise aufgebracht werden. Besonders vorteilhaft ist es, das Umlenkgetriebe in dem vorgegebenen Abstand vom anderen Umlenkgetriebe zu verfahren und/oder um eine senkrechte Achse zu schwenken. Dadurch ergibt sich eine eindeutige Beziehung zwischen dem Verstellweg bzw. Verstellwinkel und der entsprechenden Prüfbelastung. Auch die Überlagerung der beiden Belastungsarten führt zu eindeutigen und reproduzierbaren Prüfergebnissen.

Die Bewegung des Umlenkgetriebes kann mit konstruktiv einfachen Mitteln verwirklicht werden, wenn das Umlenkgetriebe in einem Parallelrahmen schwenkbar gehalten ist, der in einer senkrecht wirkenden Bewegungsvorrichtung gehalten ist.

Mit Hilfe des Parallelrahmens lassen sich auch Belastungsverhältisse realisieren, wie sie bei Wellen für sog. Schräglenkerachsen auftreten. Hierzu ist es lediglich erforderlich, den Parallelrahmen schräg zur Welle auszurichten. Wellen unterschiedlicher Länge lassen sich mit Hilfe des Verspannprüfstands ebenfalls untersuchen. Hierzu ist es lediglich erforderlich, den Abstand zwischen den beiden Umlenkgetrieben entsprechend der Länge der zu untersuchenden Welle einzustellen. Dies kann beispielsweise dadurch erfolgen, daß die aus dem keiner Vertikal- bzw. Schwenkbewegung unterworfenen Umlenkgetriebe und den beiden Verspannkupplungen bestehende Baueinheit in ihrem Abstand zum anderen Umlenkgetriebe verstellbar ist.

Wellen, die zweigeteilt sind und in ihrem Verlauf ein Gelenk besitzen, können ebenfalls geprüft werden. Hierzu ist die Verwendung eines Zwischenständers vorteilhaft, der die Wellen im Bereich des Zwischengelenks lagert. Die Wellen sind dann vor einem abknickenden Bereich des Zwischenlagers geschützt.

Schließlich kann das Umlenkgetriebe selbst so ausgebildet sein, daß es außerhalb seines Gehäuses kein resultieren des Moment überträgt. Hierzu sind drei Zahnräder vorgesehen, wovon die beiden äußeren mit jeweils einem der Prüflinge verbunden sind und das mittlere Zahnrad diese beiden Zahnräder kraftflüssig miteinander verbindet. Eine derartige Bauform eines Umlenkgetriebes ist bei einer mit einer Verspannkupplung integrierten Bauform aus der Zeitschrift ATZ, Jahrgang 1963, 1961, Heft 8, Seiten 239 bis 242 bekannt.

In der Zeichnung ist ein Ausführungsbeispiel der Erfindung dargestellt. Es zeigt

Fig. 1     einen Prüfstand für Abtriebswellen von der Seite,

Fig. 2     den Prüfstand von Figur 1 von vorne,

Fig. 3     eine Draufsicht auf den Prüfstand von Figur 1,

Fig. 4     einen Prüfstand entsprechend dem Prüfstand von Figur 1 für Gelenkwellen in der Seitenansicht entsprechend Figur 1 und

Fig. 5     einen entsprechenden Prüfstand für Abtriebswellen für Querlenker und Schräglenkerachsen in der Draufsicht.

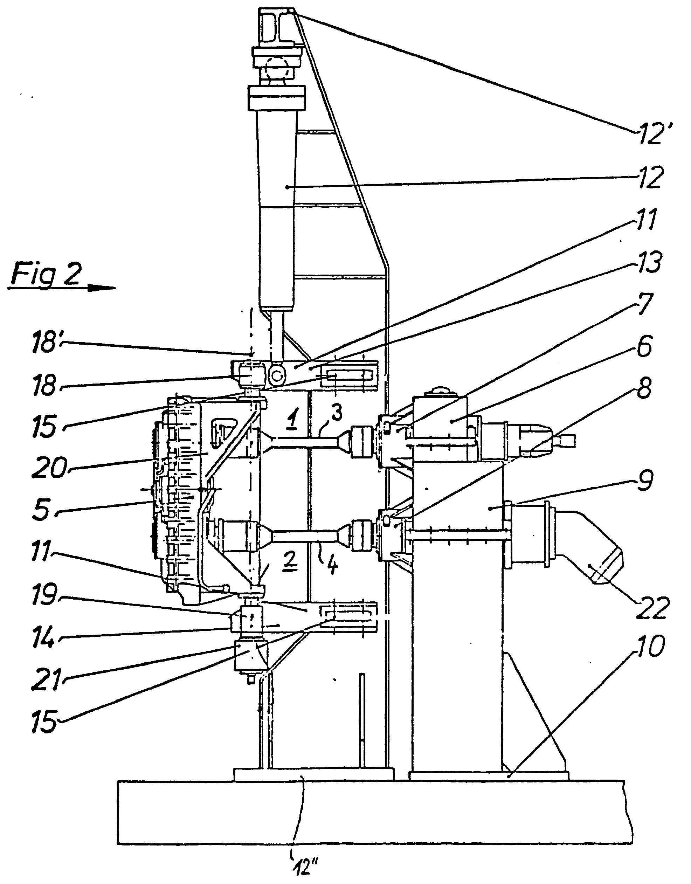

Der Prüfstand von Fig. 1 bis 3 enthält in einem geschlossenen Prüfkreis zwei parallele Prüfstrecken 1 und 2, in denen jeweils ein Prüfling in Form einer Abtriebswelle 3 bzw. 4 liegt. An den beiden Enden der Prüfstrecken 1 und 2 sitzen Umlenkgetriebe 5 und 6. Ferner sind zwischen dem Umlenkgetriebe 6 und den Abtriebswellen 3 und 4 Verspannkupplungen 7 und 8 angeordnet.

Die das Umlenkgetriebe 6 und die Verspannkupplungen 7 und 8 enthaltende Baueinheit 9 sitzt auf einer Grundplatte 10, während das Umlenkgetriebe 5 in einem Parallelrahmen 11 gehalten ist. Der Parallelrahmen 11 ist an einem Hubzylinder 12 befestigt, der seinerseits an einem Portalrahmen 12' mit einer Grundplatte 12'' gehalten ist.

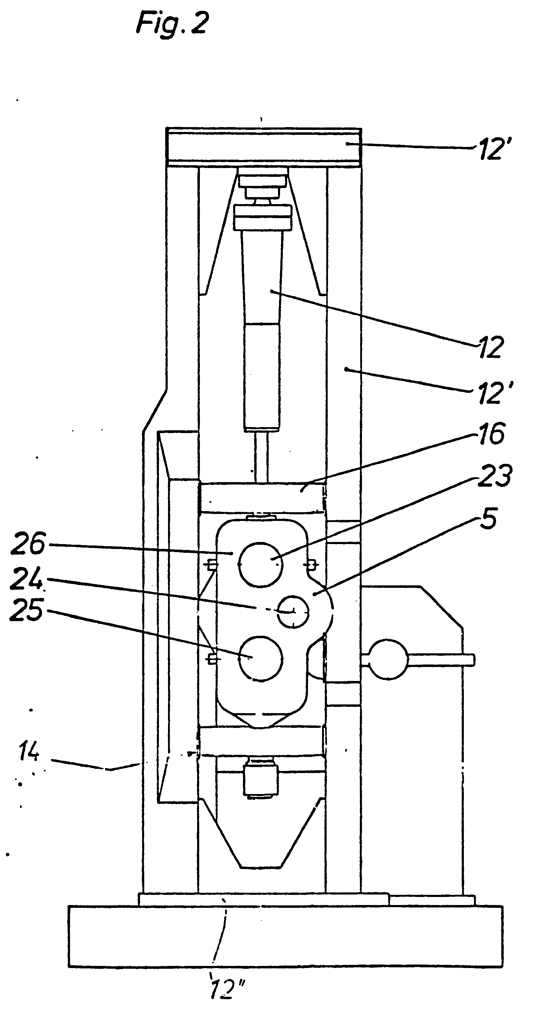

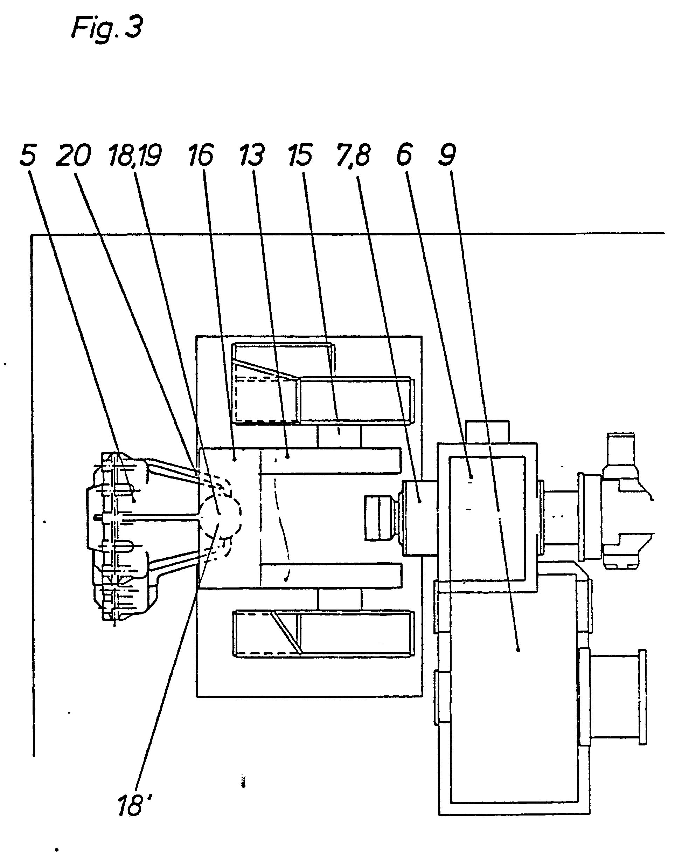

Der Parallelrahmen 11 besitzt zwei U-förmige Rahmenteile 13 (Fig. 3) und 14 (Fig. 2), deren Schenkel in Lagern 15 drehbeweglich gehalten sind. Im Basiskörper 16 des Rahmenteils 13 bzw. entsprechend indem dargestellten Basiskörper des Rahmenteils 14 befinden sich Drehlager 18 und 19, die ein Halteteil 20 für das Umlenkgetriebe 5 aufnehmen. Unterhalb des Drehlagers 19 sitzt ein Drehzylinder 21, mit dem das Halteteil 20 samt Umlenkgetriebe um eine Achse 18' geschwenkt werden kann, die durch die Drehlager 18 und 19 verlauft.

Zur Prüfung der Abtriebswellen 3 und 4 auf Verspannfestigkeit werden diese mit Hilfe der Verspannkupplungen 7 und 8 mit einem Drehmoment beaufschlagt. Die Drehmomente der beiden Verspannkupplungen 7 und 8 sind gleich. Eine Abhängigkeit der Elastizitäten der Abtriebswellen 3 und 4 besteht nicht. Der Verdrehwinkel, um den jede Abtriebswelle aufgrund des wirksamen Drehmoments verdreht wird, hängt allein von dem durch die jeweilige Verspannkupplung aufgebrachten Drehmoment und der Elastizität der Abtriebswelle selbst ab. Die Eigenfrequenz des Prüfstands ist hoch und im wesentlichen lediglich durch die Eigenfrequenz der Abtriebswellen selbst bestimmt, da elastische Abhängigkeiten zwischen den Prüfstrecken 1 und 2 nicht bestehen. Dies gilt unabhängig davon, mit welcher Drehzahl die Abtriebswellen 3 und 4 mit Hilfe eines Antriebsmotors 22 angetrieben werden, der ebenfalls Bestandteil der Baueinheit 9 ist.

Die Vorderansicht von Figur 2 läßt im wesentlichen den Aufbau des Umlenkgetriebes 5 erkennen. Es besteht im wesentlichen aus drei Zahnrädern 23 bis 25, von denen die Zahnräder 23 und 25 mit einer der Abtriebswellen 3 bzw. 4 verbunden sind und das mittlere Zahnrad 24 innerhalb des Getriebegehäuses 26 gelagert ist. Das außerhalb des Getriebegehäuses übertragene Drehmoment ist bei dieser Bauform des Getriebes stets 0, da sich die durch die Verspannkupplungen hervorgerufenen Drehmomente mit Hilfe des Zahnrads 24 kompensieren.

Die Draufsicht des Prüfstands von Figur 1, wie sie in Figur 3 dargestellt ist, zeigt die räumliche Anordnung des Trägers 20 für das Umlenkgetriebe 5 sowie den Aufbau der Baueinheit 9 mit Verspannkupplungen 7 und 8 sowie dem Umlenkgetriebe 6.

Mit Hilfe des Hubzylinders 12 und des Drehzylinders 21 werden zusätzliche Prüfbelastungen für die Abtriebswellen 3 und 4 aufgebracht, die den Belastungsverhältnissen der Abtriebswellen 3 und 4 in der Praxis angepaßt sind und beispielsweise auch einen nicht-linearen Verlauf besitzen können. Damit wird es möglich, bei einem Prüfstand, dessen Eigenfrequenz nahezu identisch mit der Eigenfrequenz der Prüflinge (3 und 4) ist, neben der Belastung durch ein Drehmoment zusätzliche, praxisgerechte Belastungen durch Vertikal- und Schwenkbewegung des am Umlenkgetriebe 5 liegenden Wellenendes vorzunehmen. Diese Zusatzbelastungen werden unmittelbar durch das Umlenkgetriebe 5 in die Prüflinge 3 und 4 eingeleitet.

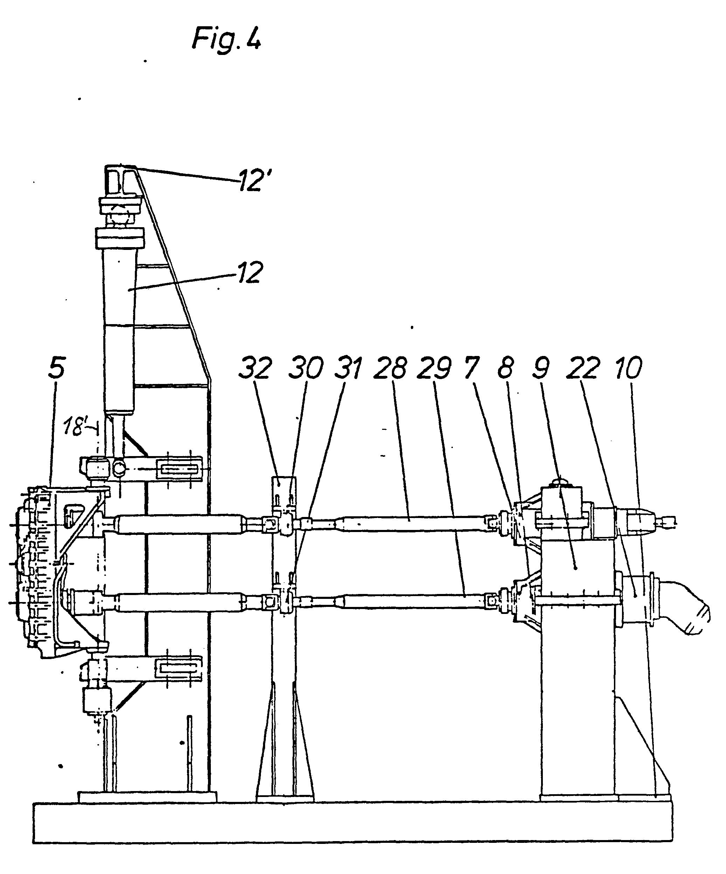

Der Prüfstand von Figur 4 dient zur Prüfung von Gelenkwellen. Hierzu ist die Baueinheit 9 in ihrem Abstand vom Umlenkgetriebe 5 auf die Länge der zu prüfenden Gelenkwellen 28 und 29 einstellbar. Im Bereich des Zwischengelenks 30 und 31 der Gelenkwellen 28 und 29 befindet sich ein stationärer Zwischenständer 32, der die Gelenkwellen 28 und 29 lagert. Auch hier ist zwischen den beiden Prüfstrecken 1 und 2 jede elastische Abhängigkeit ausgeschlossen und somit die Eigenfrequemz des Prüfstands im wesentlichen durch die Eigenfrequenz der beiden Prüflinge bestimmt.

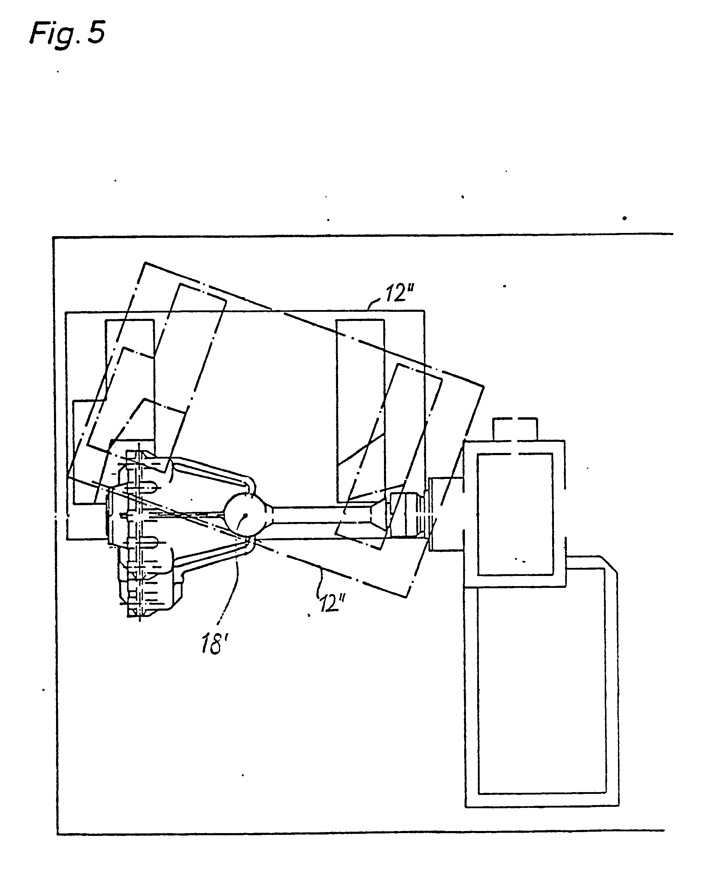

Figur 5 schließlich zeigt einen Prüfstand, der für Abtriebswellen in Schräglenker- oder Querlenkerachsen Verwendung findet. Im Unterschied zum Prüfstand von Figur 1 ist der Parallelrahmen schräg oder quer zu den Antriebswellen 3 und 4 ausrichtbar. Dies wird durch Schwenken der aus der Grundplatte 12'' und dem Portalrahmen 12' bestehenden Baueinheit um den Endpunkt der Abtriebswellen 3 und 4, d. h. die Achse 18' erreicht. Die Anordnung für Querlenkerachsen ist durchgezogen, die für Schräglenkerachsen strichpunktiert eingezeichnet. Das Umlenkgetriebe 5 bleibt dabei bei Fehlen der mit dem Hubzylinder 12 bzw. dem Drehzylinder 15 aufgebrachten zusätzlichen Prüfbelastungen in seiner Lage unverändert.

## Patentansprüche

1. Verspannprüfstand für Wellen, mit einem durch Umlenkgetriebe geschlossenen und zwei parallele Prüfstrecken enthaltenden Prüfkreis, in denen jeweils eine Welle durch eine Verspannkupplung mit einem einer Drehbewegung überlagerten Drehmoment verspannt ist, und mit einer Vorrichtung für eine zusätzliche Prüfbelastung des Wellenendes, dadurch gekennzeichnet, daß die in den Prüfstrecken (1, 2) aufgebrachten Drehmomente entgegengesetzt gleich sind und daß die Prüfbelastungen mittels des einen Umlenkgetriebes (5) erzeugt sind, das in einem vorgegebenen Abstand vom anderen Umlenkgetriebe (6) beweglich gelagert ist.

2. Verspannprüfstand nach Anspruch 1, dadurch gekennzeichnet, daß das eine Umlenkgetriebe (5) in diesem Abstand senkrecht verfahrbar ist.

3. Verspannprüfstand nach Anspruch 1 oder 2, dadurch gekennzeichnet, daß das eine Umlenkgetriebe (5) in diesem Abstand um eine senkrechte Achse (18') schwenkbar ist.

4. Verspannprüfstand nach Anspruch 2 und 3, dadurch gekennzeichnet, daß das Umlenkgetriebe (5) in einem Parallelrahmen (11) schwenkbar gehalten ist, der in Richtung der senkrechten Achse (18') bewegbar ist (Hubzylinder 12).

5. Verspannprüfstand nach einem der Ansprüche 1 bis 4, dadurch gekennzeichnet, daß der Parallelrahmen (11) schräg oder quer zu den Wellen (3, 4) ausrichtbar ist.

6. Verspannprüfstand nach einem der Ansprüche 1 bis 5, dadurch gekennzeichnet, daß das Umlenkgetriebe (5) drei Zahnräder (23, 24, 25) enthält, von denen die beiden äußeren mit den beiden Wellen (3, 4) verbunden sind und das mittlere Zahnrad (24) die kraftschlüssige Verbindung der äußeren Zahnräder (23, 25) herstellt.

7. Verspannprüfstand nach einem der Ansprüche 1 bis 6, dadurch gekennzeichnet, daß das andere Umlenkgetriebe (6) in seinem Abstand von dem einen Umlenkgetriebe (5) änderbar ist.

8. Verspannprüfstand nach Anspruch 7, gekennzeichnet durch einen stationären Zwischenständer (32) zwischen den Umlenkgetrieben (5 und 6), auf dem zu prüfende Gelenk- Wellen (28 und 29) in Höhe ihres Zwischengelenks (30 und 31) gelagert sind.

## Claims

1. A tension test bench for axles, comprising a text circuit which is closed by re-directing gearing and contains two parallel test sections, in which, in each case, an axle is tensioned by a tension coupling with a torque which is superimposed on a rotary motion, and with a device for an additional test stress of the axle end, characterised in that the torques applied in the test sections (1, 2) are inversely identical and that the test stresses are produced by means of one re-directing gear (5) which is mounted so as to be movable at a given distance from the other re-directing gear (6).

2. A tension test bench according to claim 1, characterised in that one re-directing gear (5) is able to be moved vertically over this distance.

3. A tension test bench according to claim 1 or 2, characterised in that one re-directing gear (5) is orientable over this distance about a vertical axis (18').

4. A tension test bench according to claim 2 and 3, characterised in that the re-directing gear (5) is held so as to be orientable in a parallel frame (11) which is movable in the direction of the vetical axis (18') (lifting cylinder 12).

5. A tension test bench according to any one of claims 1 to 4, characterised in that the parallel frame (11) is capable of being aligned obliquely or transversely of the shafts (3, 4).

6. A tension test bench according to any one of claims 1 to 5, characterised in that the re-directing gear (5) contains three gear wheels (23, 24, 25), of which the two outer ones are connected with the two axles (3, 4) and the central gear wheel (24) produces the force-locking connection of the outer gear wheels (23, 25).

7. A tension test bench according to any one of claims 1 to 6, characterised in that the other re-directing gear (6) is changeable in its distance from the re-directing gear (5).

8. A tension test bench according to claim 7, characterised by a stationary intermediate stand (32) between the re-directing gears (5 and 6), on which jointed axles (28 and 29) which are to be tested are mounted at the level of their intermediate joint (30 and 31).

## Revendications

1. Banc d'essai de contrainte pour essieux, avec un circuit d'essai fermé par des boîtes de renvoi et comprenant deux tronçons d'essai parallèles, dans lesquels chaque fois un essieu est contraint par un accouplement de contrainte, avec un couple de rotation superposé à un mouvement de rotation et avec un dispositif pour appliquer un chargement d'essai supplémentaire de l'extrémité d'essieu, caractérisé en ce que les couples de rotation qui sont appliqués dans les tronçons d'essai (1, 2) sont égaux et opposés et que les charges d'essai sont produites au moyen d'une boîte de renvoi (5), qui est guidée de manière mobile et a une distance prédéterminée de l'autre boîte de renvoi (6).

2. Banc d'essai de contrainte pour essieux selon la revendication 1, caractérisé en ce qu'une boîte de renvoi (5) est déplaçable verticalement à cette distance.

3. Banc d'essai de contrainte pour essieux selon l'une quelconque des revendications 1 ou 2, caractérisé en ce qu'une boîte de renvoi (5) est basculante à cette distance, autour d'un axe vertical (18').

4. Banc d'essai de contrainte pour essieux selon l'une quelconque des revendications 2 et 3, caractérisé en ce que la boîte de renvoi (5) est maintenue basculante dans un chassis parallèle (11), qui est mobile en direction de l'axe vertical (18') (cylindre de course 12).

5. Banc d'essai de contrainte pour essieux selon l'une quelconque des revendications 1 à 4, caractérisé en ce que le chassis parallèle (11) est orientable en biais ou bien transversalement aux essieux (3, 4).

6. Banc d'essai de contrainte pour essieux selon l'une quelconque des revendications 1 à 5, caractérisé en ce que la boîtede renvoi comprend trois roues dentées (23, 24, 25) desquelles les deux qui sont extérieures sont reliées avec les deux essieux (3, 4) et la roue dentée qui est médiane (24) produit la liaison de force des autres roues dentées (23, 25).

7. Banc d'essai de contrainte pour essieux selon l'une quelconque des revendications 1 à 6, caractérisé en ce que l'autre boîte de renvoi (6) peut voir sa distance modifiée, d'avec la boîte de renvoi (5).

8. Banc d'essai de contrainte pour essieux selon la revendication 7, caractérisé par un support intermédiaire stationnaire (32), entre les boîtes de renvoi (5 et 6), sur lequel les essieux articulés (28 et 29) à essayer sont guidés hauteur de leur articulation intermédiaire (30 et 31).

Fig 2

*Fig. 2*

Fig. 3

5   20   18,19   16   13   15   7,8   6   9

18'

## Fig. 4

*Fig. 5*